# EUROPEAN PATENT SPECIFICATION

(11) **EP 3 705 350 B1**
(45) Date of publication and mention of the grant of the patent: **15.09.2021**
(21) Application number: 20154334.5
(22) Date of filing: 29.01.2020
(51) Int. Cl.: B60R 21/02, B60P 7/14, B60P 3/20, B60P 3/42

(54) **MOVABLE BULKHEADS FOR MOTOR VEHICLES**
BEWEGLICHE SCHOTTEN FÜR KRAFTFAHRZEUGE
CLOISONS MOBILES POUR VÉHICULES À MOTEUR

(30) Priority: 05.03.2019 GB 201902923
(43) Date of publication of application: 09.09.2020
(73) Proprietor: Ford Global Technologies, LLC, Dearborn, MI 48126 (US)
(72) Inventor: NEUGEBAUER, James, Chelmsford, Essex CM2 8NH (GB); GERHARDT, Torsten, London, N22 7UL (GB); WALLACE, Pete, Billericay Essex CM12 9JX (GB); MURRAY, James, Nicholas, Chelmsford Essex CM1 3ND (GB)
(74) Representative: Haseltine Lake Kempner LLP

(56) References cited:
- EP-A2- 1 354 760
- CN-U- 204 161 477
- US-A- 2 790 396
- US-A1- 2008 253 857
- US-A1- 2009 142 154
- US-B1- 9 855 979

## Description

### Technical Field

The present disclosure relates to a movable bulkhead for a motor vehicle.

### Background

Interiors of motor vehicles, such as light commercial vehicles or light trucks may comprise a passenger compartment, in which one or more seats can be provided for occupants of the vehicle, and a cargo compartment for the storage of cargo, such as goods being transported by the vehicle, tools, construction materials etc.

The vehicle may comprise a bulkhead configured to partition the interior of the vehicle. For example, the bulkhead may be configured to separate the passenger compartment from the cargo compartment.

The bulkhead may be provided in order to protect the occupants of the vehicle from items of cargo that become loose during transit. The position of the bulkhead within the vehicle interior may define the proportion of the vehicle interior available for seating the vehicle occupants and the proportion of the vehicle interior available for storing cargo.

Document US2009/142154 discloses a trailer insulation and partitioning system including one or more roll-up partitions or bulkheads that alter the amount of space in a trailer that is required to be refrigerated.

Document CN204161477 discloses a vehicle interior zoning and isolating device and a vehicle with the vehicle interior zoning and isolating device. The vehicle interior zoning and isolating device comprises a roller shutter door and fixed isolating device bodies which are located on the two sides of the roller shutter door.

Document EP1354760 discloses a van such as a panel van which has a driver's cab, a load space behind the cab and a bulkhead separating the cab from the load space. The bulkhead can be moved backwards and forwards within the van to vary the relative volumes of the cab and the load space.

Document US2790396 discloses a compartment car having a plurality of compartments separated by movable sliding partitions.

### Statements of Invention

According to an aspect of the present disclosure, there is provided a movable bulkhead assembly, e.g. configured to partition an interior of a motor vehicle, the assembly comprising a segmented shutter and a track assembly configured to guide the movement of the segmented shutter, wherein the track assembly comprises a first track portion, the segmented shutter being movable along the first track portion to deploy or retract the bulkhead. Each of the segments of the shutter comprise two or more segment portions slidable relative to one another, e.g. in a direction perpendicular to the track portions, such that widths of the segments of the shutter are variable.

The first track portion may extend in a direction with a component in a vertical direction. In other words, the first track portion may be a vertically extending track portion.

The segments of the shutter may comprise followers, e.g. rollers, configured to move, e.g. roll, along tracks of the track assembly to guide movement of the shutter.

The track assembly may further comprise a second track portion spaced apart from the first track portion in a longitudinal direction of the vehicle. The direction in which the second track portion extends may be parallel with the direction in which the first track portion extends. The second track portion may extend in a direction with a component in a vertical direction. In other words, the first track portion may be a vertically extending track portion. The segmented shutter may be movable along the track between the first and second track portions, e.g. in order to adjust the partitioning of the interior volume of the vehicle.

The segmented shutter may be configured to form a door of the vehicle when the segmented shutter is aligned with the second track portion or the first track portion.

The movable bulkhead assembly may further comprise a horizontally extending track portion. The horizontally extending track portion may extend between the first and second track portions. The segmented shutter may be moved between the first and second track portions via the horizontally extending track portion. The horizontally extending track portion may be arranged adjacent to a roof of the vehicle. The movable bulkhead assembly may be configured such that the segmented shutter can be stowed on a horizontal orientation by aligning the segmented shutter with the horizontally extending track portion.

The track assembly may comprise a first track arranged at a first lateral side of the movable bulkhead, and optionally of the motor vehicle, and a second track arranged at a second lateral side, e.g. opposite the first side, of the movable bulkhead, and optionally of the motor vehicle. A width of the segmented shutter may extend between the first and second tracks. The first and second tracks may be for guiding the movement of the shutter segments at the first and second sides of the movable bulkhead respectively.

The first and second tracks, or portions thereof, may be arranged non-parallel to one another, such that the width of the segmented shutter, e.g. between the first and second sides of the movable bulkhead assembly, varies along a length of the track assembly.

The movable bulkhead may further comprise one or more frame panels extending outwardly, e.g. laterally outward, from track assembly, e.g. form the first and second tracks of the track assembly. The frame panels may be for filling a space between the track assembly and wall of a body structure of the vehicle, e.g. such that the cross-sectional area of the interior of the vehicle is filled by the movable bulkhead in a plane of the movable bulkhead.

The frame panels may be pivotally couplable to the wall of the body structure of the vehicle. For example, the frame panels may comprise pivotal couplings for coupling to the wall of the body structure.

The movable bulkhead assembly may further comprise a lock for securing the position of the segmented shutter within the vehicle interior.

According to an aspect of the present disclosure, there is provided a movable bulkhead assembly, the assembly comprising a segmented shutter and a track assembly configured to guide the movement of the segmented shutter, wherein the track assembly comprises a first track portion at least partially defining a plane parallel with a lateral direction of the motor vehicle, the segmented shutter being movable along the first track portion to deploy or retract the bulkhead.

The plane defined by the first track portion may be parallel with a vertical direction. In other words, the first track portion may extend vertically.

The track assembly according to the invention comprises a first track arranged at a first lateral side of the movable bulkhead and may further comprise a second track arranged at a second lateral side of the movable bulkhead. The first and second tracks, or portions thereof, may be arranged non-parallel to one another, such that the width of the segmented shutter varies along a length of the track assembly.

A motor vehicle may comprises a body structure comprising walls defining an interior volume of the motor vehicle; and the above-mentioned movable bulkhead assembly.

The interior volume may comprise a passenger space, e.g. in which seat for passengers can be secured, and a cargo space for storing cargo, e.g. to be transported by the vehicle. The first track portion may be positioned such that, when the segmented shutter is aligned with the first track portion, the segmented shutter is arranged to separate the passenger space from the cargo space. Additionally or alternatively, the segmented shutter may be arranged to separate the passenger space from the cargo space when the segmented shutter is aligned with the second track portion.

The vehicle may comprise a first row of seats and a second row of seats. The first track portion may be positioned between the first and second rows of seats, e.g. in the longitudinal direction of the vehicle. The seats, e.g. within the first and/or second rows of seats may be removable form the vehicle. The first track portion may be positioned between the positions at which the first and second rows of seats may be provided in the vehicle interior. The vehicle may comprises one or more first seat attachment points, for securing seats in the first row of seats, and one or more second seat attachment points for securing seats in the second row of seats. The first track portion may be at least partially aligned with the second seat attachment points or positioned between the first and second seat attachment points. Alternatively, the second track portion may positioned between the first and second rows of seats, e.g. in the longitudinal direction of the vehicle.

The second track portion may be positioned adjacent to an opening in the body structure of the vehicle. The segmented shutter may be configured to form a door of into the interior of the vehicle when the segmented shutter is aligned with the second track portion.

The first track portion may be positioned adjacent to a side door of the motor vehicle, such that, when the segmented shutter is aligned with the first track portion, part of the interior of the vehicle forwards of the first track portion is accessible via the side door and part of the interior of the vehicle rearwards of the first track portion is inaccessible via the side door.

The motor vehicle may further comprise a lock for securing the position of the segmented shutter relative to the body structure.

### Brief Description of the Drawings

For a better understanding of the present invention, and to show more clearly how it may be carried into effect, reference will now be made, by way of example, to the accompanying drawings, in which:
Figure 1 is a partial perspective view of a motor vehicle comprising a movable bulkhead according to the present disclosure not forming part of the present invention;
Figures 2a, 2b and 2c are schematic plan views of motor vehicles comprising movable bulkheads according to the present disclosure not forming part of the present invention;
Figures 3a and 3b are schematic, rear, cross-sectional views of the motor vehicle comprising the movable bulkhead according to the present disclosure not forming part of the present invention;
Figures 4a and 4b are schematic, rear, cross-sectional views of the motor vehicle comprising another movable bulkhead according to the present disclosure not forming part of the present invention; and
Figures 5a and 5b are schematic, rear, cross-sectional views of the motor vehicle comprising a movable bulkhead according to the present invention.

### Detailed Description

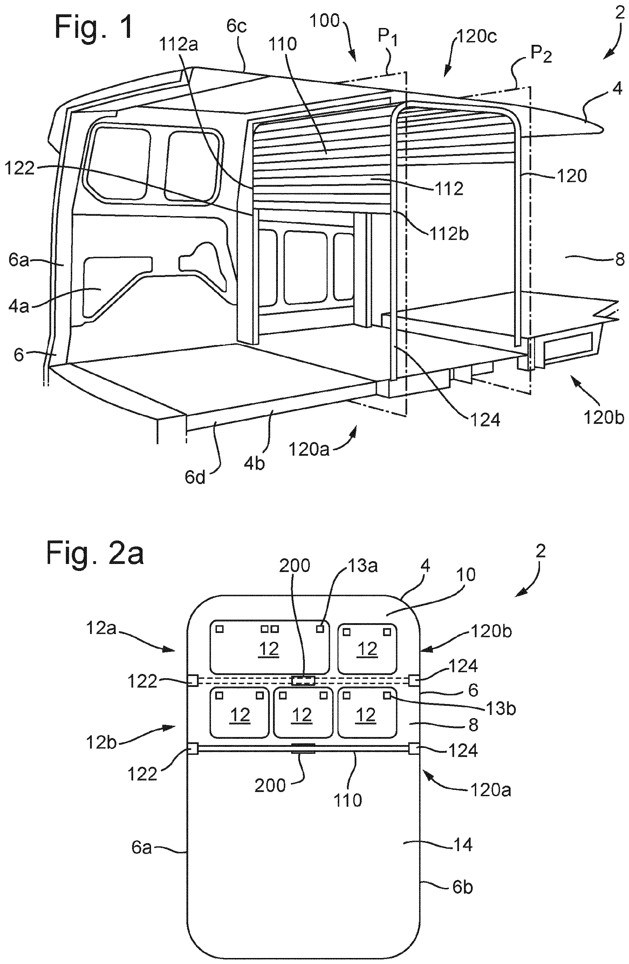

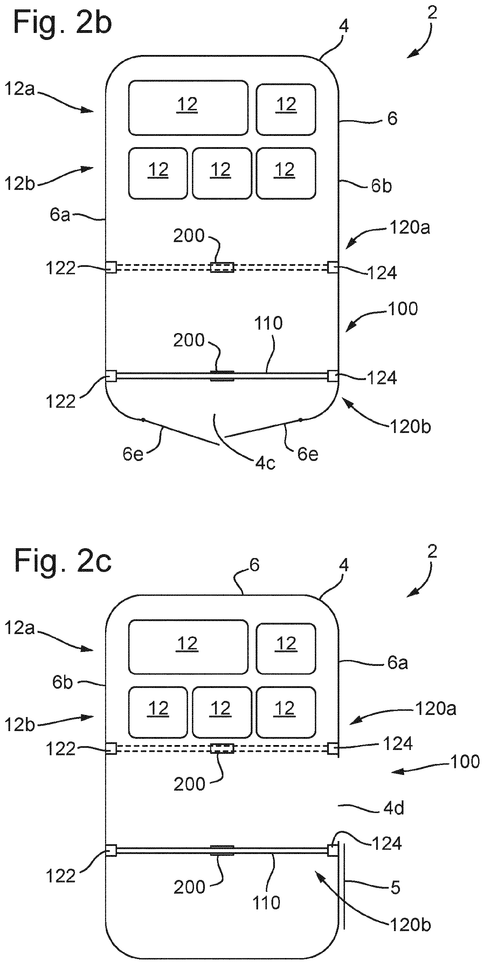

With reference to Figure 1, a vehicle 2, such as a motor vehicle, according to arrangements of the present disclosure, comprises a body structure 4 comprising one or more walls 6 defining an interior 8 of the vehicle. In particular, the body structure may comprise first and second opposite side walls 6a, 6b, roof 6c and floor 6d. In Figure 1, the second side wall 6b of the body structure has been omitted for clarity. The second side wall 6b is shown in Figures 2a, 2b and 2c.

The vehicle 2 further comprises a movable bulkhead assembly 100 configured to partition the interior 8 of the vehicle. The movable bulkhead assembly 100 comprises a segmented shutter 110 and a track assembly 120 for guiding the movement of the segmented shutter 110.

The track assembly 120 comprises a first track 122 coupled to the body structure 4 at a first lateral side 4a of the body structure, e.g. to the first side wall 6a, and a second track 124 coupled to the body structure 4 at a second lateral side 4b of the body structure opposite to the first track 122, e.g. to the second side wall 6b.

A width of the segmented shutter 110, e.g. between the first and second tracks 122, 124, extends across a width of the interior 8 of the vehicle, e.g. between the first and second side walls 6a, 6b. The segmented shutter 110 comprises a plurality of shutter segments 112 pivotally coupled together in a series arrangement along a length of the segmented shutter 110, e.g. extending along the first and second tracks 122, 124.

The segmented shutter, e.g. the shutter segments 112 of the segmented shutter, are configured to movably, e.g. slidably, couple to the first track 122, e.g. at first ends 112a of the shutter segments, and the second track 124, e.g. at second ends 112b of the shutter segments 112. For example, the shutter segments 112 may comprise rollers coupled to the first and second ends 112a, 112b of the shutter segments which are movably coupled to the first and second tracks 122, 124, e.g. by enabling the rollers to roll along the first and second tracks 122, 124.

As shown in Figure 1, the track assembly 120 comprises a first track portion 120a. The first track portion 120a comprises first lengths of the first and second tracks 122, 124 extending in a vertical direction within the interior 8 of the vehicle 2. The first track portion 120a, e.g. the lengths of the first and second tracks 122, 124 forming the first track portion 120a, define a first plane P₁ in which the segmented shutter 110 is arranged when the segmented shutter is aligned with the first track portion 120a. The first plane P₁ is parallel with a lateral direction of the motor vehicle 2.

The segmented shutter 110 can be moved along the tracks of the track assembly 120, e.g. forming the first track portion 120a, in order to adjust the position of the segmented shutter 110 within the interior 8 of the vehicle, e.g. to deploy or retract the bulkhead.

The track assembly 120 further comprises a second track portion 120b. The second track portion 120b comprises second lengths of the first and second tracks 122, 124 extending in the vertical direction within the interior 8 of the vehicle 2. The second track portion 120b, e.g. the lengths of the first and second tracks 122, 124 forming the second track portion 120b, define a second plane P₂ in which the segmented shutter 110 is arranged when the segmented shutter is aligned with the second track portion 120b.

The second plane P₂ is parallel with and spaced apart from the first plane P₁ in a direction perpendicular to the first and second planes P₁, P₂, e.g. in a longitudinal direction of the motor vehicle. In other words, the second vertically extending track portion 120b is spaced apart from the first vertically extending track portion 120a in the longitudinal direction of the motor vehicle.

The segmented shutter 110 can be moved along the tracks of the track assembly 120 between the first and second track portions 120a, 120b. The position, e.g. longitudinal position, of the segmented shutter 110 within the interior 8 of the vehicle can therefore be adjusted by moving the segmented shutter 110 along the tracks 122, 124 of the track assembly 120.

The track assembly 120 may further comprise a third track portion 120c. The third track portion 120c comprises third lengths of the first and second tracks 122, 124 extending between the lengths forming the first and second track portions 120a, 120b. As shown in Figure 1, the third lengths of the tracks 122, 124 forming the third track portion 120c may extend in a horizontal direction. The third lengths of the tracks 122, 124 forming the third track portion 120c may be arranged at the upper ends of the first and second track portions 120a, 120b, such that the third track portion 120c is arranged at or close to the roof 6c of the vehicle 2.

The segmented shutter 110 may be moved along the third track portion 120c between the first and second track portions 120a, 120b in order to adjust the position of the segmented shutter 110 within the vehicle interior 8. In some arrangements, the third track portion 120c may be configured such that the segmented shutter 110 can be stowed in a horizontal orientation, e.g. adjacent to the roof 6c of the vehicle, by aligning the segmented shutter 110 with the third track portion 120c. For example, the third lengths of the first and second tracks 122, 124 forming the third track portion 120c may be approximately equal to or greater in length than the segmented shutter 110.

With reference to Figure 2a, the interior 8 of the vehicle 2 may comprise a passenger space 10, in which one or more seats 12 for passenger of the vehicle may be provided. For example, the vehicle 2 may comprise first and second rows 12a, 12b of seats arranged within the passenger space 10. The interior 8 may further comprise a cargo space 14 for items of cargo to be stored within the vehicle interior.

The movable bulkhead assembly 100, e.g. the segmented shutter 110 of the movable bulkhead, may be configured to separate the passenger space 10 from the cargo space 14. The proportions of the interior 8 of the vehicle forming the passenger space 10 and the cargo space 14 may be defined by the position of the segmented shutter 110 of the movable bulkhead assembly 100 within the interior 8 of the motor vehicle.

As shown in Figure 2a, the first track portion 120a may be arranged within the vehicle interior 8, such that the segmented shutter 110 is arranged behind the second row 12b of seats when the segmented shutter is aligned with the first track portion 120a.

The second track portion 120b may be arranged forwards of the first track portion 120a within the interior 8 of the vehicle. When the segmented shutter 110 is aligned with the second track portion 120b, the size of the cargo space 14 may therefore be greater than the size of the cargo space when the segmented shutter 110 is aligned with the first track portion 120a

The second track portion 120b may be aligned, e.g. longitudinal aligned, with or arranged forwards of the second row of seats 12b. As shown in Figure 2a, the second track portion 120b may be arranged between, e.g. longitudinally between, the first and second rows 12a, 12b of seats. When the segmented shutter 110 is arranged forwards of the second row of seats 12b, the seats 12 within the second row of seats 12b may be removed from the vehicle. Removing the seats from the second row of seats 12b may enable additional cargo to be stored in the cargo space 14.

The second track portion 120b may be arranged rearwards of the first row 12a of seats, e.g. immediately rearward of the first row of seats. When the segmented shutter 110 is aligned with the second track portion 120b, the segmented shutter 110 may be arranged behind the first row of seats 12a.

The vehicle 2 may comprise one or more first seat attachment points 13a, for coupling seats 12 to the body 4 of the vehicle in the first row 12a, and one or more second seat attachment points 13b, for coupling seats to the body of the vehicle in the second row of seats. The second track portion 120b may arranged between, e.g. longitudinally between, the first seat attachment points 13a and second seat attachment points 13b. Alternatively, the second track portion 120b may be at least partially aligned with the second seat attachment points 13b.

In some arrangements, the seat attachment points may comprise seat rails extending between the first and second rows 12a, 12b of seats. The seats 12 may be coupled to the seat rails at a desired position along the seat rails, in order to mount the seats in the first or second row of seats. In such arrangements, the second track portion 120b may be at least partially aligned with the seat rails at a position between which the seats in the first row 12a and the seats in the second row 12b may be coupled to the seat rails.

With reference to Figure 2b, in another arrangement, the second track portion 120b may be arranged adjacent, e.g. longitudinally adjacent, to a rear doorway opening 4c in the vehicle body 4, such that the segmented shutter 110 can form a door of the vehicle, when the segmented shutter 110 is aligned with the second track portion 120b.

In the arrangement shown in Figure 2b, hinged doors 6e are provided, for closing the rear doorway opening 4c, in addition to the segmented shutter 110. The movable bulkhead assembly 100 may thereby provide additional security at the rear of vehicle 2 when aligned with the second track portion. In other arrangements, hinged doors may not be provided for closing the rear doorway opening 4c and the rear doorway opening may be closed by the segmented shutter 110. In some arrangements, the second track portion 120b may be aligned with the rear doorway opening 4c.

As depicted in Figure 2b, the first track portion 120a may be arranged such that cargo space 14 is partitioned by the segmented shutter 110, e.g. such that part of the cargo space 14 is provided on either side of the segmented shutter 110, when the segmented shutter is aligned with the first track portion 120a. This may allow part of the cargo space 14 to be partitioned off, such that the part of the cargo space 14 is inaccessible via the rear doorway opening 4c of the vehicle whilst the segmented shutter 110 is aligned with the first track portion 120a.

With reference to Figure 2c, in some arrangements, the second track portion 120b may be arranged such that part of the cargo space 14 is provided on either side of the segmented shutter 110 when the segmented shutter 110 is aligned with the second track portion 120b. The part of the cargo space 14 forwards of the second track portion 120b may not be accessible via the rear doorway opening 4c of the vehicle when the segmented shutter 110 is aligned with the second track portion 120b.

As shown in Figures 2c, the second track portion 120b may be positioned rearwards of a side doorway opening 4d in the vehicle body 4. Accordingly, the part of the cargo space 14 forwards of the second track portion 120b may be accessible via the side doorway opening 4d of the vehicle, when the segmented shutter 110 is aligned with the second track portion 120b, and the part of the cargo space 14 rearwards of the second track portion 120b may not be accessible via the side door 5 of the vehicle. Instead, the part of the cargo space 14 rearwards of the second track portion 120b may be accessible via the rear doorway opening 4c (shown in Figure 2b).

Although Figures 2a, 2b and 2c show particular combinations of the positions of the first and second track portions 120a, 120b within the vehicle interior 8, it will be appreciated that, in other arrangements, either of the first and second track portions 120a, 120b may be arranged in any of the positions shown in Figures 2a, 2b and 2c, in any desired combination.

The movable bulkhead assembly 100 or the vehicle 2 may comprise one or more locks 200 configured to lock the position of the segmented shutter 110 relative to the track assembly 120 and/or the body 4 of the vehicle. The locks 200 may enable a user, e.g. the driver of the vehicle, to lock the position of the segmented shutter 110, e.g. in a position aligned with the first track portion 120a, in a position aligned with the second track portion 120b or in a stowed position in which the segmented shutter is aligned with the third track portion 120c. For example, locks 200 may be provided on the vehicle body at the first, second and/or third track portions 120a, 120b, 120c.

Additionally or alternatively, one or more locks may be provided on the segmented shutter 110 and/or the track assembly 120, for locking the segmented shutter 110 to the track assembly 120 and/or to the vehicle body 4.

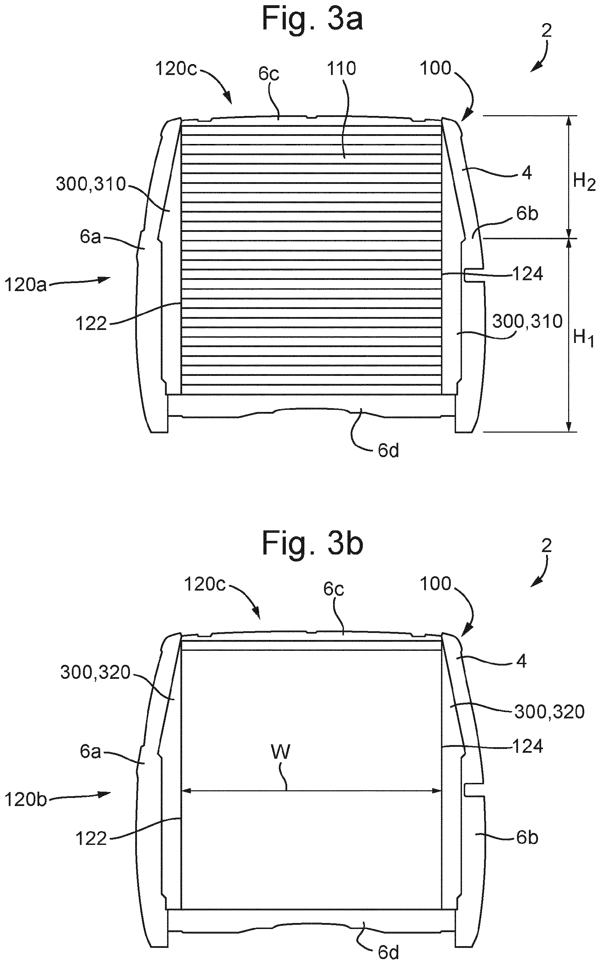

As shown in Figures 3a and 3b, a width of the body structure 4 of the vehicle may be substantially constant over at least a part H₁ of the height of the vehicle. The sides 4a, 4b of the vehicle body structure may therefore be parallel with one another over at least the part H₁ of the height of the vehicle. However, the width of the body 4 of the vehicle may vary over one or more further parts H₂ of the height of the vehicle. For example, the width of the body structure 4 may narrow towards the top of the vehicle 2. The first and second side walls 6a, 6b of the vehicle body structure may therefore be non-parallel with one another over the further parts H₂ of the height of the vehicle 2.

It may be desirable for the first and second tracks 122, 124 to extend parallel to one another, such that the distance between the first and second tracks remains constant. In this way, the width of the segmented shutter 110, e.g. between the first and second ends 112a, 112b of the shutter segments 112, can remain constant as the segmented shutter moves along the tracks of the track assembly 120.

Figures 3a and 3b show cross-sections of the vehicle 2 aligned with the first track portion 120a and the second track portion 120b respectively. In the arrangement depicted in Figures 3a and 3b, the segmented shutter 110 is aligned with the first track portion 120a.

As shown in Figures 3a and 3b, the tracks 122, 124 may be coupled to the body structure 4 at the narrowest point of the vehicle body, e.g. at or adjacent to the roof 6c, and may extend parallel to one another, e.g. substantially vertically, to the floor 6d of the body structure. Spaces may therefore be present between the first and second tracks 122, 124 and the side walls 6a, 6b of the body structure 4.

The movable bulkhead assembly 100 may further comprise a plurality of frame panels 300 extending outwardly from the track assembly 120, e.g. from the first and second tracks 122, 124, towards the first and second side walls 6a, 6b of the vehicle body 4. The frame panels 300 are shaped to fill the spaces between the track assembly 120, e.g. the first and second tracks 122, 124, and the side walls 6a, 6b of the vehicle body.

As shown in Figures 3a, one or more first frame panels 310 may be aligned, e.g. longitudinally aligned, with the first track portion 120a, for filling the spaces between the length of the tracks forming the first track portion 120a and the side walls 6a, 6b of the vehicle. Additionally, as shown in Figures 3b, one or more second frame panels 320 may be aligned with the second track portion 120b for filling the spaces between the lengths of the tracks forming the second track portion 120b and the side walls 6a, 6b of the vehicle.

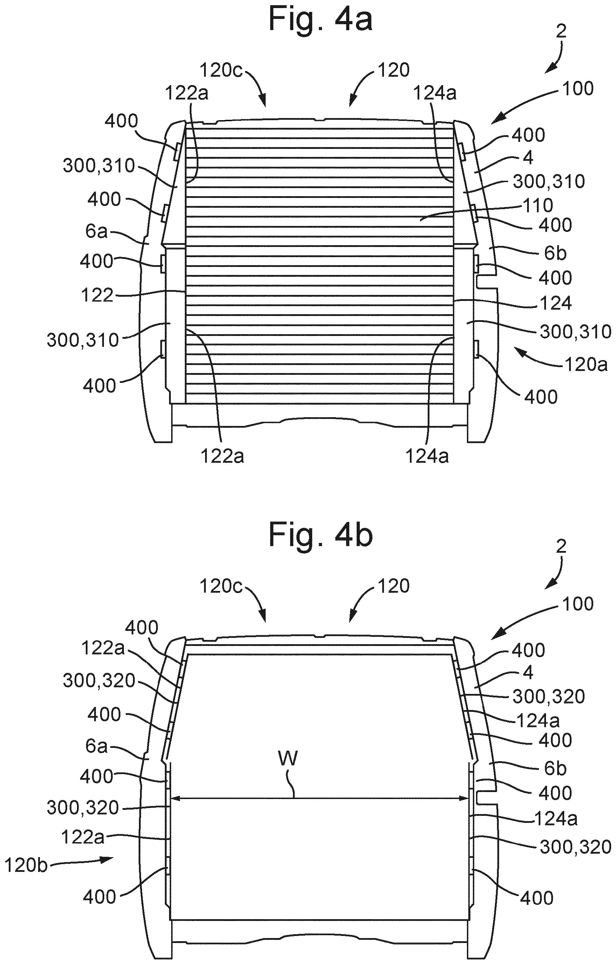

Figures 4a and 4b similarly show cross-sections of the vehicle 2 aligned with the first track portion 120a and the second track portion 120b respectively, with the segmented shutter 110 aligned with the first track portion 120a.

As shown in Figures 4a and 4b, in some arrangements the frame panels 300 may be movably, e.g. pivotally, coupled to the vehicle body 4, e.g. to the side walls 6a, 6b of the vehicle body. For example, the movable bulkhead assembly 100 may comprise a plurality of pivotal couplings 400 configured to pivotally couple the frame panels 300 to the side walls 6a, 6b of the vehicle body. The frame panels 300 may be pivotable between a first configuration, depicted in Figure 4a, in which the frame panels 300 extend across the interior 8 of the vehicle 2 in a plane parallel to or aligned with the first and second planes P₁, P₂, and a second configuration, depicted in Figure 4b, in which the frame panels 300 are angled relative to the first and second planes P₁, P₂. For example, the frame panels 300 may be positioned against, e.g. substantially parallel with, the side walls 6a, 6b of the body structure when in the second configuration.

The first and second tracks 122, 124 forming the first and second track portions 120a, 120b may be coupled to the frame panels 300. As shown in Figures 4a and 4b, the first and second tracks 122, 124 may comprise a plurality of track segments 122a, 124a, each of the track segments may be coupled to one of the frame panels 300. When the frame panels 300 are in the first configuration, the track segments 122a, 124a may be aligned with one another and may be aligned with the third track portion 120c, such that the segmented shutter 110 is able to move along the track assembly, across the track segments 122a, 122b, e.g. to deploy or retract the bulkhead. When the frame panels 300 are in the second configuration, the track segments 122a, 124a may not be aligned with one another and/or may not be aligned with the third track portion 120c.

As shown in Figure 4b, when the frame panels 320 are in the second configuration, e.g. when the track segments 122a, 124a are positioned adjacent to the side walls 6a, 6b, an unobstructed width W of the interior 8 of the vehicle may be greater than when the frame panels 320 are in the first configuration, e.g. when the frame panels 320 are arranged in the plane parallel to or aligned with the first and second planes P₁, P₂, as depicted in Figure 4a, or are fixedly coupled to the sidewalls 6a, 6b, as depicted in Figures 3a and 3b.

As depicted in Figures 4a and 4b, when the segmented shutter 110 is aligned with the first track portion 120a and the first frame panels 310 are in the first configuration, the second frame panels 320 may be arranged in the second configuration in order to increase the unobstructed width W of the interior 8 at the second plane P₂ (compared to when the second frame panels 320 are in the first configuration). In the same way, when the segmented shutter 110 is aligned with the second track portion 120b and the second frame panels 320 are in the first configuration, the first frame panels 310 may be arranged in the second configuration in order to increase the unobstructed width W of the interior 8 at the first plane P₁ (compared to when the first frame panels 310 are in the first configuration). When the segmented shutter is aligned with the third track portion 120c, the first frame panels 310 and the second frame panels 320 may be arranged in the second configuration in order to increase the unobstructed width W of the interior 8 at the first and second planes P₁, P₂ respectively (compared to when the first and second frame panels 310, 320 are in the first configuration).

The movable bulkhead assembly 100 may be configured such that positions of the frame panels 300 can be secured in the first and/or in the second configurations. For example, the movable bulkhead assembly 100 may comprise one or more securing mechanisms for securing the positions of the frame panels 300.

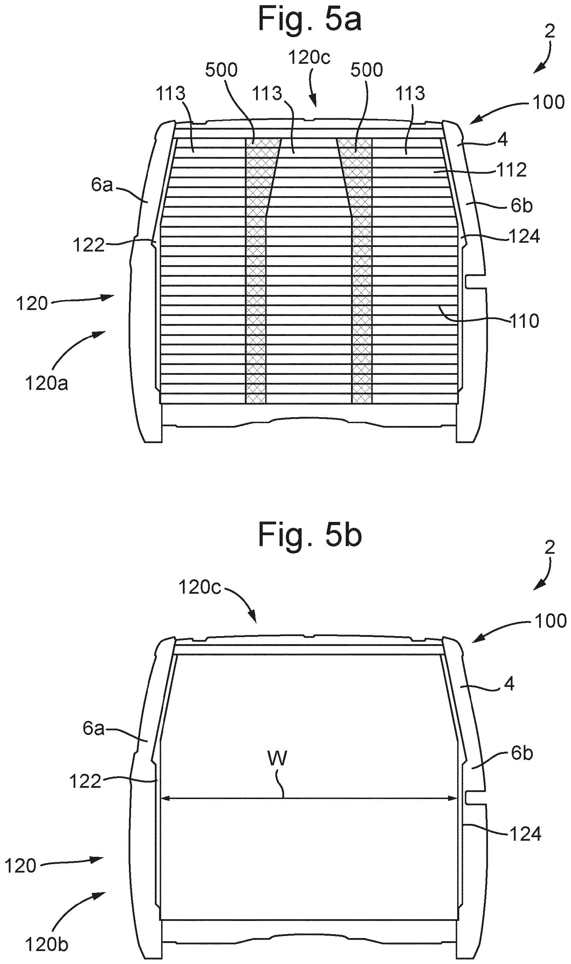

Figures 5a and 5b similarly show cross-sections of the vehicle 2 aligned with the first track portion 120a and the second track portion 120b respectively, with the segmented shutter 110 aligned with the first track portion 120a.

As depicted in Figures 5a and 5b, according to the present invention, the first and second tracks 122, 124 may be arranged such that the width of the segmented shutter 110 varies along the length of the track assembly 120. In particular, one or more corresponding parts of the first and second tracks 122, 124 may be arranged non-parallel with one another.

As shown in Figures 5a and 5b, the first and second tracks 122, 124 may be coupled to respective side walls 6a, 6b of the vehicle and each of the tracks 122, 124 may extend, e.g. in a direction with a vertical component, parallel with the side wall 6a, 6b of the vehicle to which it is coupled, e.g. between the roof 6c and floor 6d of the body structure 4.

The segments 112 of the segmented shutter 110 may be configured such that the widths of the segments, e.g. between the first and second ends 112a, 112b of the segments, are variable. For example, the segments 112 may comprise a plurality of segment portions 113 slidably mounted relative to one another, such that the widths of the segments 112 between their first and second ends 112a, 112b can vary by virtue of the segment portions 113 sliding relative to one another.

As depicted in Figure 5b, the segment portions 113 forming a particular segment 112 may be arranged to overlap with the adjacent segments of the particular segment to allow the width of the segment 112 to vary. In Figure 5a, an area of overlap 500 between the segment portions 113 is indicated. As shown, the amount that the segment portions 113 overlap depends on the width of the segmented shutter 110, e.g. between the first and second tracks 122, 124. The lengths of the segment portions 113 may be configured such that the segment portions 113 of a particular segment 112 at least partially overlap when the width of the segment 112 is at a maximum, e.g. when the distance between the first and second tracks 122, 124 is at a maximum at the position of the segment 112.

As described above, the ends 112a, 112b of the segments may be coupled to the first and second tracks 122, 124 respectively. As the segmented shutter 110 moves along a length of the track assembly 120, along which the first and second tracks 122, 124 are non-parallel with one another, the ends 112a, 112b of the segments may be pushed together or pulled apart due to the convergence or divergence of the first and second tracks 122, 124, thereby adjusting the widths of the shutter segments 112. The width of the segmented shutter 110 may therefore vary along the length of the segmented shutter 110, such that the segmented shutter extends across the width of the vehicle interior 8 between the first and second tracks 122, 124.

As depicted in Figure 5b, when one or more parts of the lengths of the first and second tracks 122, 124 are arranged non-parallel with one another, the unobstructed width W of the interior 8 of the vehicle, may be increased compared to arrangements in which the frame panels 300 extend at least partially across the width of the interior, e.g. as depicted in Figures 3a, 3b and 4a.

In the arrangements described above the first and second track portions extend in vertical directions. However, in other arrangements the first and second track portions may not extend in vertical directions. For example, the first and second track portions may extend in horizontal direction or another direction having a component in the vertical and/or horizontal direction. The first and second track portions may extend in direction parallel with one another.

## Claims

1. A movable bulkhead assembly (100), the assembly comprising a segmented shutter (110) and a track assembly (120) configured to guide the movement of the segmented shutter (110), wherein the track assembly (120) comprises a first track portion (120a), the segmented shutter (110) being movable along the first track portion (120a) to deploy or retract the bulkhead, wherein the track assembly (120) comprises a first track (122) arranged at a first lateral side of the movable bulkhead and a second track (124) arranged at a second lateral side of the movable bulkhead, and **characterised in** the first and second tracks (122, 124), or portions thereof, are arranged non-parallel to one another, such that the width of the segmented shutter (110) varies along a length of the track assembly (120).

2. The movable bulkhead assembly (100) of claim 1, wherein the track assembly (120) further comprises a second track portion (120b) spaced apart from the first track portion in a longitudinal direction of the vehicle (2), wherein the segmented shutter (110) is movable along the track between the first and second track portions.

3. The movable bulkhead assembly (100) of claim 2, wherein the segmented shutter (110) is configured to form a door of the vehicle (2) when the segmented shutter (110) is aligned with the first and/or second track portion (120b).

4. The movable bulkhead assembly (100) of any of the preceding claims, wherein the track assembly (120) further comprises a horizontally extending track portion, optionally wherein the horizontally extending track portion extends between the first and second track portions.

5. The movable bulkhead assembly (100) of claim 4, wherein the assembly is configured such that the segmented shutter (110) can be stowed on a horizontal orientation by aligning the segmented shutter with the horizontally extending track portion.

6. The movable bulkhead assembly (100) of any of the preceding claims, wherein each of the segments of the shutter comprise two or more segment portions (113) slidable relative to one another, such that widths of the segments of the shutter are variable.

7. The movable bulkhead assembly (100) of any of the preceding claims, wherein the movable bulkhead further comprises one or more frame panels (300) extending outwardly from track assembly (120), the frame panels (300) for filling a space between the track assembly (120) and wall of a body structure (4) of the vehicle (2).

8. The movable bulkhead assembly (100) of claim 7, wherein the frame panels (300) are pivotally couplable to the wall of the body structure (4) of the vehicle (2).

9. The movable bulkhead assembly (100) of any of the preceding claims, wherein the movable bulkhead assembly further comprises a lock for securing the position of the segmented shutter (110) within the vehicle interior (8).

10. A motor vehicle (2) comprising:
a body structure (4) comprising walls defining an interior (8) volume of the motor vehicle (2); and
the movable bulkhead assembly (100) according to any of the preceding claims.

11. The motor vehicle (2) according to claim 10, wherein the interior volume comprises a passenger space (10) and a cargo space (14) for storing cargo, wherein the first track portion (120a) is positioned such that, when the segmented shutter (110) is aligned with the first track portion (120a), the segmented shutter (110) is arranged to separate the passenger space (10) from the cargo space (14).

12. The motor vehicle (2) according to claim 10 or 11, wherein the vehicle (2) comprises a first row of seats (12a) and a second row of seats (12b), wherein the first track portion (120a) is positioned between the first and second rows of seats (12a, 12b).

13. The motor vehicle (2) according to any of claims 10 to 12, when depending on claim 2, wherein the second track portion (120b) is positioned adjacent to an opening in the body structure (4) of the vehicle (2), such that the segmented shutter (110) forms a door of into the interior (8) of the vehicle (2) when the segmented shutter (110) is aligned with the second track portion (120b).

14. The motor vehicle (2) according to any of claims 10 to 13, wherein the first track portion (120a) is positioned adjacent to a side door of the motor vehicle (2), such that, when the segmented shutter (110) is aligned with the first portion, part of the interior (8) of the vehicle (2) forwards of the first track portion (120a) is accessible via the side door and part of the interior (8) of the vehicle (2) rearwards of the first track portion (120a) is inaccessible via the side door.

## Patentansprüche

1. Bewegliche Trennwandanordnung (100), wobei die Anordnung eine segmentierte Jalousie (110) und eine Schienenanordnung (120) umfasst, die konfiguriert ist, um die Bewegung der segmentierten Jalousie (110) zu führen, wobei die Schienenanordnung (120) einen ersten Schienenabschnitt (120a) umfasst, wobei die segmentierte Jalousie (110) entlang des ersten Schienenabschnitts (120a) bewegt werden kann, um die Trennwand zu entfalten oder zurückzuziehen, wobei die Schienenanordnung (120) eine erste Schiene (122), die an einer ersten seitlichen Seite der beweglichen Trennwand angeordnet ist, und eine zweite Schiene (124), die an einer zweiten seitlichen Seite der beweglichen Trennwand angeordnet ist, umfasst, und **dadurch gekennzeichnet, dass** die erste und die zweite Schiene (122, 124) oder Abschnitte davon nicht parallel zueinander angeordnet sind, sodass die Breite der segmentierten Jalousie(110) entlang einer Länge der Schienenanordnung (120) variiert.

2. Bewegliche Trennwandanordnung (100) gemäß Anspruch 1, wobei die Schienenanordnung (120) ferner einen zweiten Schienenabschnitt (120b) umfasst, der in einer Längsrichtung des Fahrzeugs (2) von dem ersten Schienenabschnitt beabstandet ist, wobei die segmentierte Jalousie (110) zwischen dem ersten und dem zweiten Schienenabschnitt entlang der Schiene beweglich ist.

3. Bewegliche Trennwandanordnung (100) gemäß Anspruch 2, wobei die segmentierte Jalousie (110) konfiguriert ist, um eine Tür des Fahrzeugs (2) zu bilden, wenn die segmentierte Jalousie (110) mit dem ersten und/oder dem zweiten Schienenabschnitt (120b) ausgerichtet ist.

4. Bewegliche Trennwandanordnung (100) gemäß einem der vorherigen Ansprüche, wobei die Schienenanordnung (120) ferner einen sich horizontal erstreckenden Schienenabschnitt umfasst, optional wobei sich der sich horizontal erstreckende Schienenabschnitt zwischen dem ersten und dem zweiten Schienenabschnitt erstreckt.

5. Bewegliche Trennwandanordnung (100) gemäß Anspruch 4, wobei die Anordnung konfiguriert ist, sodass die segmentierte Jalousie (110) in einer horizontalen Ausrichtung verstaut werden kann, indem die segmentierte Jalousie mit dem sich horizontal erstreckenden Schienenabschnitt ausgerichtet wird.

6. Bewegliche Trennwandanordnung (100) gemäß einem der vorherigen Ansprüche, wobei jedes der Segmente der Jalousie zwei oder mehrere Segmentabschnitte (113) umfasst, die in Bezug aufeinander verschiebbar sind, sodass die Breiten der Segmente der Jalousie variabel sind.

7. Bewegliche Trennwandanordnung (100) gemäß einem der vorherigen Ansprüche, wobei die bewegliche Trennwand ferner eine oder mehrere Rahmenplatten (300) umfasst, die sich von der Schienenanordnung (120) nach außen erstrecken, wobei die Rahmenplatten (300) zum Ausfüllen eines Raums zwischen der Schienenanordnung (120) und der Wand einer Karosseriestruktur (4) des Fahrzeugs (2) sind.

8. Bewegliche Trennwandanordnung (100) gemäß Anspruch 7, wobei die Rahmenplatten (300) schwenkbar mit der Wand der Karosseriestruktur (4) des Fahrzeugs (2) gekoppelt werden können.

9. Bewegliche Trennwandanordnung (100) gemäß einem der vorherigen Ansprüche, wobei die bewegliche Trennwandanordnung ferner eine Verriegelung umfasst, um die Position der segmentierten Jalousie (110) innerhalb des Fahrzeuginnenraums (8) zu sichern.

10. Kraftfahrzeug (2), umfassend:
eine Karosseriestruktur (4), umfassend Wände, die ein Innenvolumen (8) des Kraftfahrzeugs (2) definieren; und
die bewegliche Trennwandanordnung (100) gemäß einem der vorherigen Ansprüche.

11. Kraftfahrzeug (2) gemäß Anspruch 10, wobei das Innenvolumen einen Fahrgastraum (10) und einen Frachtraum (14) zum Lagern von Fracht umfasst, wobei der erste Schienenabschnitt (120a) so positioniert ist, sodass, wenn die segmentierte Jalousie (110) mit dem ersten Schienenabschnitt (120a) ausgerichtet ist, die segmentierte Jalousie (110) angeordnet ist, um den Fahrgastraum (10) von dem Frachtraum (14) zu trennen.

12. Kraftfahrzeug (2) gemäß Anspruch 10 oder 11, wobei das Fahrzeug (2) eine erste Sitzreihe (12a) und eine zweite Sitzreihe (12b) umfasst, wobei der erste Schienenabschnitt (120a) zwischen der ersten und der zweiten Sitzreihe (12a, 12b) positioniert ist.

13. Kraftfahrzeug (2) gemäß einem der Ansprüche 10 bis 12, wenn abhängig von Anspruch 2, wobei der zweite Schienenabschnitt (120b) anliegend an einer Öffnung in der Karosseriestruktur (4) des Fahrzeugs (2) positioniert ist, sodass die segmentierte Jalousie (110) eine Tür in den Innenraum (8) des Fahrzeugs (2) bildet, wenn die segmentierte Jalousie (110) mit dem zweiten Schienenabschnitt (120b) ausgerichtet ist.

14. Kraftfahrzeug (2) gemäß einem der Ansprüche 10 bis 13, wobei der erste Schienenabschnitt (120a) anliegend an einer Seitentür des Kraftfahrzeugs (2) positioniert ist, sodass, wenn die segmentierte Jalousie (110) mit dem ersten Abschnitt ausgerichtet ist, ein Teil des Innenraums (8) des Fahrzeugs (2) vor dem ersten Schienenabschnitt (120a) über die Seitentür zugänglich ist und ein Teil des Innenraums (8) des Fahrzeugs (2) hinter dem ersten Schienenabschnitt (120a) über die Seitentür nicht zugänglich ist.

## Revendications

1. Un ensemble de cloison mobile (100), l'ensemble comprenant un volet segmenté (110) et un ensemble rail (120) configuré pour guider le mouvement du volet segmenté (110), dans lequel l'ensemble rail (120) comprend une première partie de rail (120a), le volet segmenté (110) étant mobile le long de la première partie de rail (120a) pour déployer ou rétracter la cloison, dans lequel l'ensemble rail (120) comprend un premier rail (122) disposé sur un premier côté latéral de la cloison mobile et un deuxième rail (124) disposé sur un deuxième côté latéral de la cloison mobile, et **caractérisé en ce que** les premier et deuxième rails (122, 124), ou des parties de ceux-ci, sont disposés de manière non parallèle l'un par rapport à l'autre, de sorte que la largeur du volet segmenté (110) varie sur une longueur de l'ensemble rail (120).

2. L'ensemble de cloison mobile (100) selon la revendication 1, dans lequel l'ensemble rail (120) comprend en outre une deuxième partie de rail (120b) espacée de la première partie de rail dans une direction longitudinale du véhicule (2), dans lequel le volet segmenté (110) est mobile le long du rail entre les première et deuxième parties de rail.

3. L'ensemble de cloison mobile (100) selon la revendication 2, dans lequel le volet segmenté (110) est configuré pour former une portière du véhicule (2) lorsque le volet segmenté (110) est aligné avec la première et / ou la deuxième partie de rail (120b).

4. L'ensemble de cloison mobile (100) selon l'une quelconque des revendications précédentes, dans lequel l'ensemble rail (120) comprend en outre une partie de rail s'étendant horizontalement, éventuellement dans lequel la partie de rail s'étendant horizontalement s'étend entre les première et deuxième parties de rail.

5. L'ensemble de cloison mobile (100) selon la revendication 4, dans lequel l'ensemble est configuré de telle sorte que le volet segmenté (110) peut être rangé dans une orientation horizontale en alignant le volet segmenté avec la partie de rail s'étendant horizontalement.

6. L'ensemble de cloison mobile (100) selon l'une quelconque des revendications précédentes, dans lequel chacun des segments du volet comprend deux ou plusieurs parties de segment (113) pouvant coulisser les unes par rapport aux autres, de sorte que les largeurs des segments du volet sont variables.

7. L'ensemble de cloison mobile (100) selon l'une quelconque des revendications précédentes, dans lequel la cloison mobile comprend en outre un ou plusieurs panneaux de cadre (300) s'étendant vers l'extérieur depuis l'ensemble rail (120), les panneaux de cadre (300) étant destinés à remplir un espace entre l'ensemble rail (120) et la paroi d'une structure de carrosserie (4) du véhicule (2).

8. L'ensemble de cloison mobile (100) selon la revendication 7, dans lequel les panneaux de cadre (300) peuvent être couplés de manière pivotante à la paroi de la structure de carrosserie (4) du véhicule (2).

9. L'ensemble de cloison mobile (100) selon l'une quelconque des revendications précédentes, dans lequel l'ensemble de cloison mobile comprend en outre un verrou pour fixer la position du volet segmenté (110) à l'intérieur du véhicule (8).

10. Un véhicule automobile (2) comprenant :
une structure de carrosserie (4) comprenant des parois définissant un volume intérieur (8) du véhicule automobile (2) ; et
l'ensemble de cloison mobile (100) selon l'une quelconque des revendications précédentes.

11. Le véhicule automobile (2) selon la revendication 10, dans lequel le volume intérieur comprend un habitacle (10) et un espace de chargement (14) pour stocker une cargaison, dans lequel la première partie de rail (120a) est positionnée de sorte que, lorsque le volet segmenté (110) est aligné avec la première partie de rail (120a), le volet segmenté (110) est agencé pour séparer l'habitacle (10) de l'espace de chargement (14).

12. Le véhicule automobile (2) selon la revendication 10 ou 11, dans lequel le véhicule (2) comprend une première rangée de sièges (12a) et une deuxième rangée de sièges (12b), dans lequel la première partie de rail (120a) est positionnée entre les première et deuxième rangées de sièges (12a, 12b).

13. Le véhicule automobile (2) selon l'une quelconque des revendications 10 à 12, lorsque selon la revendication 2, dans lequel la deuxième partie de rail (120b) est positionnée de manière adjacente à une ouverture dans la structure de carrosserie (4) du véhicule (2), de sorte que le volet segmenté (110) forme une portière vers l'intérieur (8) du véhicule (2) lorsque le volet segmenté (110) est aligné avec la deuxième partie de rail (120b).

14. Le véhicule automobile (2) selon l'une quelconque des revendications 10 à 13, dans lequel la première partie de rail (120a) est positionnée de manière adjacente à une portière latérale du véhicule automobile (2), de sorte que, lorsque le volet segmenté (110) est aligné avec la première partie, une partie de l'intérieur (8) du véhicule (2) en avant de la première partie de rail (120a) est accessible par la portière latérale et une partie de l'intérieur (8) du véhicule (2) en arrière de la première partie de rail (120a) est inaccessible par la portière latérale.
